# EUROPÄISCHE PATENTANMELDUNG

(11) **EP 0 781 690 A2**
(43) Veröffentlichungstag der Anmeldung: **02.07.1997**
(21) Anmeldenummer: 96113703.1
(22) Anmeldetag: 27.08.1996
(51) Int. Cl.: B60R 22/18, B60R 22/46, B60J 10/00

(54) **Pyrotechnische Antriebsvorrichtung**

(30) Priorität: 01.09.1995 DE 29514068 U
(71) Anmelder: HS Technik und Design Technische Entwicklungen GmbH, 82234 Wessling (DE)
(72) Erfinder: Specht, Martin, Dipl.Ing(FH), D-82340 Feldafing (DE)
(74) Vertreter: Nöth, Heinz, Dipl.-Phys.

(57) **Zusammenfassung**

Eine pyrotechnische Antriebsvorrichtung mit einem in einer Führungseinrichtung geführten Antriebselement (1), das mit einem zu bewegenden Bauteil verbunden ist, einem pyrotechnischen Treibsatz, der in gezündetem Zustand an einer Antriebsseite des Antriebselements in einem Hochdruckraum einen Treibgasdruck erzeugt, und einer am Antriebselement vorgesehenen Dichtung (2), welche den Hochdruckraum gegenüber einer Abtriebsseite des Antriebselements (1) abdichtet, wobei die Dichtung (2) aus einem Polyetherblockamid besteht.

## Beschreibung

Die Erfindung betrifft eine pyrotechnische Antriebsvorrichtung mit einem in einer Führungseinrichtung geführten Antriebselement, das mit einem zu bewegenden Bauteil verbunden ist, einem pyrotechnischen Treibsatz, der in gezündetem Zustand an einer Antriebsseite des Antriebselements in einem Hochdruckraum einen Treibgasdruck erzeugt, und einer am Antriebselement vorgesehenen Dichtung, welche den Hochdruckraum gegenüber einer Abtriebsseite des Antriebselement abdichtet.

Eine derartige Antriebsvorrichtung kommt vor allem zum Einsatz zum Bewegen von Fahrzeugbauteilen aus einer Normalposition bei normalem Fahrbetrieb in eine Sicherheitsposition im Falle überhöhter Fahrzeugbeschleunigung bzw. Abbremsung, z.B. bei einem Unfall. Vorzugsweise kommen pyrotechnische Antriebsvorrichtungen bei Gurtstraffern zur Anwendung, wobei sogenannte Linearantriebe in Form von in Zylindern geführten Antriebskolben (z.B. DE 42 00 360 A1) oder Rotationsantriebe mit Drehkolben (DE 43 35 284 A1) zum Einsatz kommen können. Die als linear angetriebene Kolben oder als Drehkolben ausgebildete Antriebselemente sind über Zugmittel, z.B. Zugseile, oder geeignete Getriebe im Falle der Drehkolben mit dem zu bewegenden Bauteil bzw. den zu bewegenden Bauteilen, beispielsweise einem Gurtschloß, der Wickelwelle eines Aufwickelautomaten oder dem Gurtband des Sicherheitsgurtes verbunden.

Um einen einwandfreien Antrieb des Antriebselements zu gewährleisten, ist es erforderlich, die Antriebsseite des Antriebselements gegenüber der Abtriebsseite hinreichend abzudichten. Die Anforderungen an die Dichtung sind sehr hoch, da beim Zünden des pyrotechnischen Treibsatzes im Hochdruckraum an der Antriebsseite des Antriebselements innerhalb kürzester Zeit (einige Millisekunden) ein hoher Druck in der Größenordnung von 200 bis 300 Bar und hohe Temperaturen in der Größenordnung von 1000°C entstehen. Aufgrund der kurzen Zeit (60 Millisekunden), welche für das Straffen des Sicherheitsgurtes bzw. für das Entfernen von Bauteilen aus ihrer Normalposition in eine Sicherheitsposition zur Verfügung steht, lassen sich aufgrund der zur Verfügung stehenden Treibsätze diese Werte nicht umgehen. Dementsprechend muß die Abdichtung zwischen der Antriebs- und Abtriebsseite des Antriebselementes ausgebildet sein. D.h. diese Abdichtung muß die schlagartig entstehenden hohen Drücke und Temperaturen aushalten können, damit der Antrieb des Antriebselements durch den Treibgasdruck gewährleistet wird.

Aufgabe der Erfindung ist es daher, für eine pyrotechnische Antriebsvorrichtung der eingangs genannten Art eine Dichtung zwischen der Antriebs- und Abtriebsseite des Antriebselementes zu schaffen, welche die für den Antrieb des Antriebselements durch das erzeugte Treibgas erforderliche Abdichtung gewährleistet.

Diese Aufgabe wird erfindungsgemäß dadurch gelöst, daß das Material der Dichtung aus einem Polyetherblockamid besteht.

Polyetherblockamide sind elastische Polymere, die sich wie Thermoplaste verarbeiten lassen. Der Dichtungskörper, welcher zur Abdichtung der Antriebsseite gegenüber der Abtriebsseite des Antriebselements dient, ist bevorzugt als Spritzgußteil ausgebildet. Die Dichtung bzw. der Dichtungskörper kann bevorzugt die Form einer Dichtlippe haben, welche durch den Treibgasdruck an die Begrenzungswand, entlang welcher dann das Antriebselement, insbesondere der Drehkolben oder der linear bewegte Kolben bei seiner angetriebenen Bewegung geführt wird, gedrückt ist. Hierdurch wird eine selbstdichtende Wirkung erreicht. Das Dichtungsmaterial kann eine Shore-Härte D von 40 bis 60 bei 23°C aufweisen. Innerhalb dieses Bereichs ist jeder Wert der Shore-Härte D möglich. Die Shore-Härte ist hierbei bestimmt nach der Norm: ASTMD 2240. Bevorzugt kommt eine Shore-Härte von 55 zum Einsatz.

Die zur Anwendung kommenden Polyetherblockamide werden von einer linearen regelmäßigen Kette von steifen Polyamidsegmenten und flexiblen Polyethersegmenten gebildet, wobei die allgemeine chemische Formel lautet:

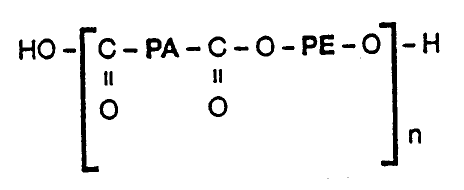

In dieser Formel bedeuten PA ein Polyamidsegment und PE ein Polyethersegment. Derartige Polyetherblockamide sind unter dem Markennamen 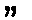 PEBAX" im Handel erhältlich.

In den Figuren sind Ausführungsbeispiele der Erfindung dargestellt. Es zeigt:
- Fig. 1:: ein erstes einen Drehkolben als Antriebselement aufweisendes Ausführungsbeispiel;
- Fig. 2:: einen Drehkolben, welcher bei dem in Fig. 1 dargestellten Ausführungsbeispiel zur Anwendung kommen kann;
- Fig. 3:: einen Schnitt durch den Drehkolben der Fig. 2;
- Fig. 4:: ein weiteres Ausführungsbeispiel mit linear geführten Antriebselementen; und
- Fig. 5:: ein als Kolben ausgebildetes Antriebselement, das beim Ausführungsbeispiel der Fig. 4 zum Einsatz kommen kann.

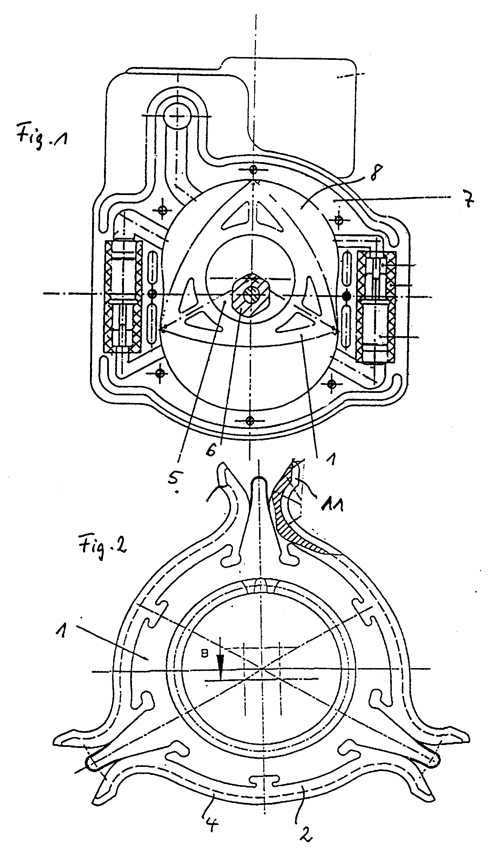

Ein in der Fig. 1 dargestelltes Ausführungsbeispiel eines pyrotechnischen Antriebs ist beispielsweise aus der DE 43 35 284 A1 und der EP 0 648 652 A1 bekannt. Das Antriebselement ist als Drehkolben 1 ausgebildet. Die in einem Hochdruckraum 8 mittels eines Treibgases erzeugte Antriebsleistung wird in eine Drehbewegung des Drehkolbens 1 umgesetzt und über eine Exzenterscheibe 5 und eine Exzenterwelle 6 auf eine Wickelwelle eines Gurtaufrollers, der nicht näher dargestellt ist, zur Gurtstraffung übertragen.

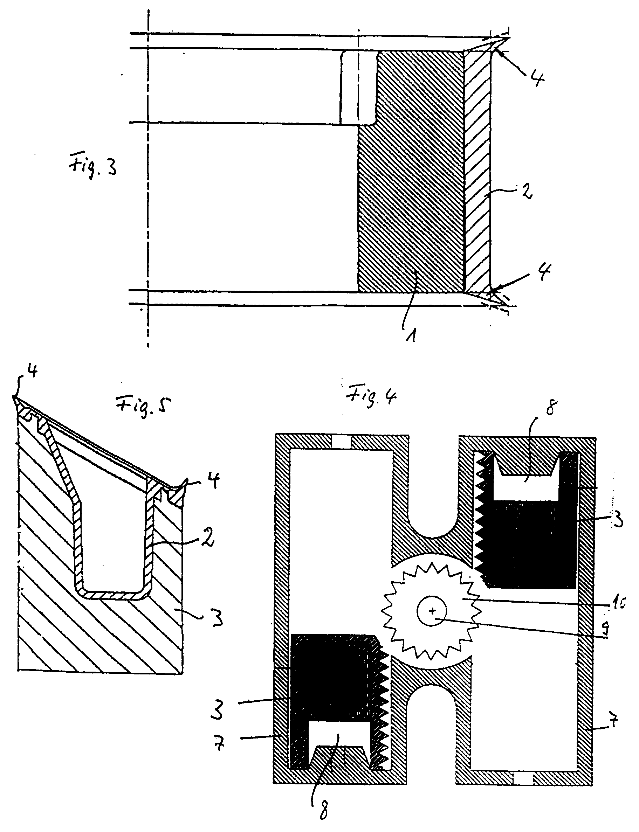

Wie aus den Figuren 2 und 3 zu ersehen ist, besitzt der Drehkolben 1 eine Dichtung 2. Diese Dichtung überdeckt beim dargestellten Ausführungsbeispiel die gesamte Fläche des Drehkolbens 1, welche den Hochdruckraum 8, in welchem der pyrotechnische Treibsatz wirkt, kolbenseitig begrenzt.

Am Rand besitzt die Dichtung 2 eine keilförmige peripher umlaufende Dichtlippe 4, welche während des gesamten Umlaufes des Drehkolbens im Gehäuse 7 für eine einwandfreie Abdichtung des Hochdruckraumes 8 sorgt. Im Bereich der drei Kanten des Drehkolbens sind die drei Dichtungsbeläge in ihren angrenzenden Bereichen 11 umgebogen und liegen auf der Trochoidinnenkontur des Gehäuses 7 während der gesamten Rotation des Drehkolbens dichtend auf. Durch die keilförmig ausgebildete Dichtlippe 4 am Rand wird ebenfalls eine selbstdichtende Wirkung erreicht.

Das Material der Dichtung besteht aus einem Polyetherblockamid, welches eine hervorragende Dichtwirkung bei den im Hochdruckraum 8 erzeugten Temperaturen und Drücken aufweist.

Ferner kann die Dichtung bei linear angetriebenen Kolben zum Einsatz kommen. Ein Ausführungsbeispiel für linear angetriebene Antriebskolben 3 ist in der Fig. 4 dargestellt. Dieses Ausführungsbeispiel ist aus der EP 0 629 531 A1 bekannt. Im Antriebsgehäuse 7 werden die Antriebskolben in zeitlicher Aufeinanderfolge angetrieben. Hierzu werden Treibsätze gezündet, die in den Hochdruckräumen 8 zur Wirkung kommen. Kolbenseitig können die Hochdruckräume 8 in der Weise durch die Dichtung ausgekleidet und abgedichtet sein, wie es in der Fig. 5 dargestellt ist. Auch bei diesem Ausführungsbeispiel ist die keilförmige Dichtlippe 4 vorgesehen. Diese umfaßt den gesamten Hochdruckraum 9 peripher. Am Kolben 3 ist die keilförmig ausgebildete Dichtlippe 4 umlaufend vorgesehen. Ferner deckt die Dichtung 2 die gesamte Fläche des Kolbens 3 ab, welche kolbenseitig den Hochdruckraum 8 begrenzt. Die Dichtung 2 kann aus einem kappenförmigen Formteil oder einer z.B. durch Spritzgießen gebildeten Schlitz bestehen.

Es ist auch möglich, die Dichtung 2 außen am Kolben 3 vorzusehen. Beispielsweise kann das Dichtungsmaterial durch Spritzgußtechnik auf den Kolben 3 aufgebracht werden. Auch die im Ausführungseispiel der Figuren 4 und 5 dargestellte Dichtung 2 besteht aus einem Polyetherblockamid, welches dies schon erläuterten Vorteile auch bei linear angetriebenen Kolben gewährleistet.

## Patentansprüche

1. Pyrotechnische Antriebsvorrichtung mit einem in einer Führungseinrichtung geführten Antriebselement, das mit einem zu bewegenden Bauteil verbunden ist, einem pyrotechnischen Treibsatz, der in gezündetem Zustand an einer Antriebsseite des Antriebselements in einem Hochdruckraum einen Treibgasdruck erzeugt, und einer am Antriebselement vorgesehenen Dichtung, welche den Hochdruckraum gegenüber einer Abtriebsseite des Antriebselements abdichtet,
dadurch **gekennzeichnet,**
daß die Dichtung (2) aus einem Polyetherblockamid besteht.

2. Vorrichtung nach Anspruch 1, dadurch gekennzeichnet, daß die Dichtung (2) eine den Hochdruckraum umfassende Dichtlippe (4) aufweist, die durch den Treibgasdruck an die Begrenzungswand, entlang welcher das Antriebselement (1; 3) bei seiner angetriebenen Bewegung geführt wird, gedrückt ist.

3. Vorrichtung nach Anspruch 1 oder 2, dadurch gekennzeichnet, daß das Dichtungsmaterial bei 23°C eine Shore-Härte D von 40 bis 60 aufweist.

4. Vorrichtung nach einem der Ansprüche 1 bis 3, dadurch gekennzeichnet, daß im wesentlichen die gesamte Fläche des Antriebselements (1; 3) von der aus einem Stück geformten, den Hochdruckraum begrenzende Dichtung (2) bedeckt ist.
